# EUROPÄISCHE PATENTSCHRIFT

(11) **EP 1 136 870 B1**
(45) Veröffentlichungstag und Bekanntmachung des Hinweises auf die Patenterteilung: **04.10.2006**
(21) Anmeldenummer: 01103943.5
(22) Anmeldetag: 19.02.2001
(51) Int. Cl.: G02F 1/13

(54) **Anzeigevorrichtung**
Displaying device
Dispositif d'affichage

(30) Priorität: 08.03.2000 DE 10010812
(43) Veröffentlichungstag der Anmeldung: 26.09.2001
(73) Patentinhaber: SIEMENS AKTIENGESELLSCHAFT, 80333 München (DE)
(72) Erfinder: Wilhelm, Heinz-Günther, 65191 Wiesbaden (DE)

(56) Entgegenhaltungen:
- EP-A- 0 302 189
- EP-A- 0 982 622
- DE-A- 19 740 424
- US-A- 6 023 311

## Beschreibung

Die Erfindung betrifft eine Anzeigevorrichtung, insbesondere in einem Fahrzeug, mit einem an seiner einem Betrachter zugewandten Vorderseite eine Flüssigkristallzelle halternden Gehäuse und mit einer auf der Rückseite des Gehäuses angeordneten Leiterplatte zur elektrischen Kontaktierung der Flüssigkristallzelle, wobei zwischen der Leiterplatte und einem außerhalb eines Anzeigebereichs der Flüssigkristallzelle angeordneten Kontaktierungsbereich der Flüssigkristallzelle ein gegen die Flüssigkristallzelle verspanntes, in etwa plattenförmiges und an seinen Flächenseiten in dem Gehäuse geführtes Kontaktierungselement zur elektrischen Verbindung von Leiterplatte und Flüssigkristallzelle angeordnet ist.

Derartige Anzeigevorrichtungen sind beispielsweise als Bestandteil von Kombinationsanzeigeinstrumenten in Kraftfahrzeugen bekannt und weit verbreitet. Dabei ist üblicherweise ein die Flüssigkristallzelle niederhaltender und an ihren Seiten einfassender Metallrahmen mit dem die Flüssigkristallzelle halternden Gehäuse oder mit einer Leiterplatte verrastet. Dieses bedeutet einen aufwendigen Montagevorgang, insbesondere das Fügen von Gehäuse, Rahmen und dem in dem Gehäuse zu führenden Kontaktierungselement hat sich als nachteilig vor allem bei Großserienproduktionen - wie sie bei Anwendungen im Kraftfahrzeugbereich erforderlich sind - erwiesen.

Darüber hinaus ist eine Anzeigevorrichtung aus der EP-A-982 622 mit den Merkmalen des Oberbegriffs des Anspruch 1 bekannt, wobei das Gehäuse mit einer Leiterplatte verrastet ist. Zwischen Leiterplatte und Flüssigkristallzelle ist ein kompakter Kontaktstreifen angeordnet. Bei dieser Vorrichtung, die insgesamt eine sehr geringe Höhe aufweist, besteht ein nur minimaler Abstand zwischen Flüssigkristallzelle und Leiterplatte. Dadurch ist einerseits eine Führung des Kontaktstreifens nicht erforderlich; andererseits ist eine Beleuchtung der Fiüssigkristalizelle mit üblichen, auf der einem Betrachter abgewandten Rückseite der Flüssigkristallzelle angeordneten Lichtquellen nicht möglich. Für einen Einsatz bei nur geringer Umgebungshelligkeit und damit wenig auf die Flüssigkristallzelle fallendem Auflicht (z. B. bei Umgebungsdunkelheit in Kraftfahrzeugen) ist eine solche Anzeigevorrichtung damit völlig ungeeignet.

Der Erfindung liegt daher die Aufgabe zugrunde, eine Anzeigevorrichtung der eingangs genannten Art zu schaffen, welche Anzeigevorrichtung einfach in Aufbau und Montage und damit für eine Großserienproduktion geeignet ist.

Diese Aufgabe wird erfindungsgemäß durch eine Anzeigevorrichtung mit den Merkmalen der Anspruch 1 gelöst.

Mit einer solchen Ausbildung ist die Anzahl der erforderlichen Bauteile für die Anzeigevorrichtung vorteilhaft verringert. Dadurch vereinfacht sich nicht nur ihre Montage, sondern auch Lagerungs- und Handhabungskosten werden gesenkt. Durch das Übergreifen der Flüssigkristallzelle in deren Kontaktierungsbereich sowie in einem diesem Bereich gegenüberliegenden Abschnitt wird mit der erfindungsgemäßen Vorrichtung dauerhaft eine Verspannung des Kontaktierungselementes sichergestellt. Damit ergibt sich über die gesamte Einsatzdauer eine sehr hohe Betriebsicherheit der Anzeige. Dieses ist insbesondere für sicherheitsrelevante Informationen, z. B. Geschwindigkeitsanzeigen in Kraftfahrzeugen, von größter Bedeutung. Darüber hinaus ermöglicht es der Erfindungsgegenstand, bei Bedarf einen im Rahmen üblicher Größenordnungen beliebigen Abstand zwischen Leiterplatte und Flüssigkristallzelle vorzusehen. In dem so geschaffenen Raum können beispielsweise Beleuchtungselemente wie Lichtquellen, Lichtleiter oder Streuscheiben für die Flüssigkristallzelle angeordnet werden. Auch können damit in eine Vielzahl von Anzeigen aufweisenden Anzeigevorrichtungen (z. B. Kombinationsanzeigeinstrumenten für Kraftfahrzeuge) Flüssigkristallzellen eine einheitliche Anzeigeoberfläche mit den weiteren Anzeigen bildend frei plaziert werden. Die erfindungsgemäße Anzeigevorrichtung stellt sicher, daß trotz der permanenten Verspannung des Kontaktierungselements keine Verformung des Gehäuses erfolgt. Die Lage der Flüssigkristallzelle ist damit über die gesamte Lebensdauer gleichbleibend und die elektrische Kontaktierung der Zelle gewährleistet.

Eine zufriedenstellende Halterung der Flüssigkristallzelle und eine dauerhafte Verspannung des Kontaktierungselements kann bei einer erfindungsgemäßen Anzeigevorrichtung bereits erreicht werden, wenn das erste Hakenelement elastisch mit einer Seitenwandung des Gehäuses verbunden ist. Jedoch wird die Lage der Flüssigkristallzelle auch über einen großen Zeitraum exakt eingehalten und die Verspannung des Kontaktierungselements sichergestellt, wenn gemäß einer vorteilhaften Weiterbildung der Erfindung das erste Hakenelement starr mit einer Seitenwandung des Gehäuses verbunden ist. Von besonderem Vorteil ist es dabei, wenn die Seitenwandung mittels eines Steges versteift ist, so daß Gehäuse und Hakenelement eine z. B. auch bei Temperaturschwankungen feste Anordnung bilden.

Man könnte sich ein erstes Hakenelement vorstellen, das den Kontaktierungsbereich der Flüssigkristallzelle lediglich in Abschnitten oder punktuell übergreift. Eine besonders gleichmäßige Druckverteilung und gute Kontaktierung von Flüssigkristallzelle, Kontaktierungselement und Leiterplatte wird hingegen vorteilhaft erreicht, wenn das erste Hakenelement den Kontaktierungsbereich in etwa über dessen gesamte Länge übergreift.

Gemäß einer anderen vorteilhaften Weiterbildung der Erfindung ist das zweite Hakenelement mit dem Gehäuse in etwa in Richtung der Anzeigeebene der Flüssigkristallzelle eine Elastizität aufweisend verbunden. Auf diese Weise ist die Flüssigkristallzelle besonders einfach in dem Gehäuse montierbar, indem die Zelle hinter das erste Hakenelement einführbar und mittels des zweiten Hakenelements mit dem Gehäuse verrastbar ist.

Dabei kann das zweite Hakenelement ein einziges Bauteil bildend mit dem Gehäuse verbunden sein, wenn es vorteilhaft an einer elastischen Seitenwandung des Gehäuses angeordnet ist. Damit wird die Bauteilanzahl des Gehäuses verringert und deren Herstellung somit erheblich vereinfacht. Die Elastizität der Seitenwandung des Gehäuses ist vorteilhaft den Aufbau des Gehäuse weiter simplifizierend dadurch zu erzielen, daß das Gehäuse zwei in einer Ebene angeordnete, in etwa senkrecht zur Anzeigeebene der Flüssigkristallzelle verlaufende Schlitze die elastische Seitenwandung bildend aufweist.

Eine besonders exakte Führung, die eine Verwölbung des Kontaktierungselements vermeidet, wodurch eine besonders zuverlässige Kontaktierung von Flüssigkristallzelle, Kontaktierungselement und Leiterplatte erreicht wird, liegt jedoch dadurch vor, daß gemäß der Erfindung das Gehäuse eine äußere Seitenwandung und eine zu dieser in etwa parallele innere Seitenwandung aufweist, zwischen welchen Wandungen das Kontaktierungselement geführt ist.

Um eine gleichmäßige Abstützung der Flüssigkristallzelle in dem Gehäuse und einen dauerhaften Halt der Zelle sicherzustellen, ist es von Vorteil, wenn an einer dem Kontaktierungselement gegenüberliegenden Seite des Gehäuses ein zwischen der Flüssigkristallzelle und der Leiterplatte verspanntes Stützelement angeordnet ist.

Flüssigkristallzellen sind druckempfindliche Bauelemente, insbesondere Drukkunterschiede über der Anzeigefläche der Zelle können zu störenden Anzeigeverfälschungen führen. Daher ist es gemäß einer anderen vorteilhaften Weiterbildung der Erfindung günstig, wenn das Stützelement und das Kontaktierungselement in etwa gleiche elastische Eigenschaften aufweisen, so daß ein gleichmäßiger Druck auf die Flüssigkristallzelle vorliegt.

Der mechanische Aufbau der Anzeigevorrichtung ist dabei besonders stabil und dauerhaltbar, wenn gemäß einer anderen vorteilhaften Weiterbildung der Erfindung das Stützelement in dem Gehäuse zwischen einer äußeren Seitenwandung und einer dieser gegenüberliegenden inneren Seitenwandung des Gehäuses geführt ist.

Besonders nützlich ist es, wenn das Stützelement elektrisch leitfähig ist. Auf diese Weise kann eine Kontaktierung der Flüssigkristallzelle mit der Leiterplatte nicht nur mittels des Kontaktierungselements, sondern auch zusätzlich mittels des Stützelements zustandegebracht werden.

Insbesondere wenn die Anzeigevorrichtung neben der Flüssigkristallzelle weitere Anzeigen, z. B. ein Kombinationsanzeigeinstrument in einem Kraftfahrzeug bildend, aufweist, ist eine sehr exakte Positionierung der Flüssigkristallzelle in dem Gehäuse (und auch gegenüber einem gegebenenfalls vorhandenen Zifferblatt) von großer Bedeutung. Für eine derartige, präzise Positionierung der Flüssigkristallzelle ist es von besonderem Vorteil, wenn gemäß einer anderen Weiterbildung der Erfindung das Gehäuse gegenüberliegende, die Flüssigkristallzelle an nicht von einem Hakenelement übergriffenen Seiten führende Stege aufweist.

Besonders kostengünstig auch in großer Stückzahl herstellbar und einfach handhabbar ist das Kontaktierungselement und/oder das Stützelement, wenn es ein Leitgummi ist.

Das Gehäuse könnte aus mehreren Elementen zusammengebaut und/oder beispielsweise als gekantetes und gebogenes Metallbauteil ausgebildet sein. Jedoch ist es gemäß einer anderen Weiterbildung der Erfindung besonders vorteilhaft, wenn das Gehäuse ein Kunststoffspritzgußbauteil ist. Damit kann das Gehäuse in einem einzigen Arbeitsgang ein einziges Bauteil mit den Haken- und Stützelementen sowie den Wandungen bildend hergestellt werden. Außerdem ist es damit vorteilhaft möglich, das Gehäuse in Form eines Mittelgehäuses für ein Kombinationsanzeigeinstrument - Aufnahmen- und/oder Lichtführungen und/oder Halterungen für weitere Anzeigeelemente aufweisend - auszubilden.

Gemäß einer anderen vorteilhaften Weiterbildung der Erfindung ist das Gehäuse zweiteilig, wobei das erste Gehäuseteil äußere Gehäusewandungen und das zweite, in das erste Gehäuseteil einfügbare Gehäuseteil innere Gehäusewandungen aufweist, wodurch Gehäuseteile einfacher Geometrie besonders leicht erzielbar sind. Die Geometrie des Gehäuses wird dabei ebenso wie der Zusammenbau der Anzeigevorrichtung weiter vereinfacht, wenn gemäß einer anderen vorteilhaften Weiterbildung der Erfindung im Bereich des Kontaktierungselements und/oder des Stützelements der Abstand zwischen der inneren und der äußeren Gehäusewandung jeweils in etwa der Dicke des Kontaktierungselements und/oder des Stützelements entspricht.

Dabei ist es für die Lagerhaltung und das Handling der Gehäuseteile vor der Montage der Anzeigevorrichtung von großem Vorteil, wenn das erste Gehäuseteil und das zweite Gehäuseteil ein einziges Bauteil bildend miteinander verbunden sind. Jeweils zueinander gehörige Gehäuseteile sind auf diese Weise nicht nur automatisch einander zugeordnet, sondern auch unverlierbar miteinander verbunden. Die Verbindung behindert die Montage des Gehäuses nicht und beansprucht ein nur geringes Werkstoffvolumen, wenn vorteilhaft das erste Gehäuseteil und das zweite Gehäuseteil mit einem Film verbunden sind. Derartig verbundene Gehäuseteile sind in besonders einfacher Weise auch im Kunststoffspritzgießverfahren herstellbar, wobei der Film eine ein einziges Bauteil bildend mit den Gehäuseteilen verbundene Kunststoffolie ist.

Die Erfindung wird im folgenden anhand von in der beifügten Zeichnung dargestellten Ausführungsbeispielen näher erläutert. Es zeigt
- Fig. 1: ein Gehäuse einer erfindungsgemäßen Anzeigevorrichtung in perspektivischer Ansicht,
- Fig. 2: einen Vertikalschnitt durch die Anzeigevorrichtung mit dem Gehäuse nach Fig. 1,
- Fig. 3: ein weiteres Gehäuse in einer geschnittenen Seitenansicht und
- Fig. 4: das Gehäuse nach Fig. 3 mit einer darin eingesetzten Flüssigkristallzelle.

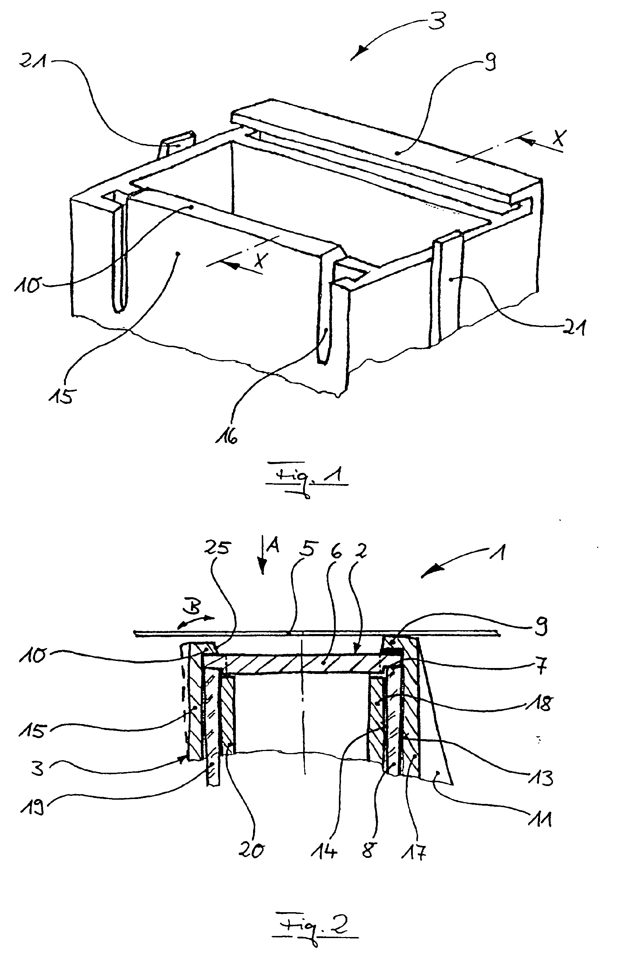

Figur 1 zeigt ein als Kunststoffspritzgußbauteil ausgebildetes Gehäuse 3 einer hier nicht weiter dargestellten Anzeigevorrichtung eines Kraftfahrzeugs. Das Gehäuse 3 weist einen kastenförmigen Aufbau mit einem an einer Langseite des Gehäuses 3 angeordneten ersten Hakenelement 9 und einem, dem ersten Hakenelement 9 gegenüberliegenden, zweiten Hakenelement 10 auf. An den Schmalseiten des Gehäuses 3 sind Stege 21 angeordnet, von denen einer zum Ausgleich von Fertigungstoleranzen federnd ausgeführt ist. Das zweite Hakenelement 10 ist an einer ebenfalls federnden, elastischen Seitenwandung 15 des Gehäuses 3 angeordnet. Die Federeigenschaft der Seitenwandung 15 wird dabei durch vertikale Schlitze 16 erreicht, die die Seitenwandung 15 seitlich von dem Gehäuse 3 trennen.

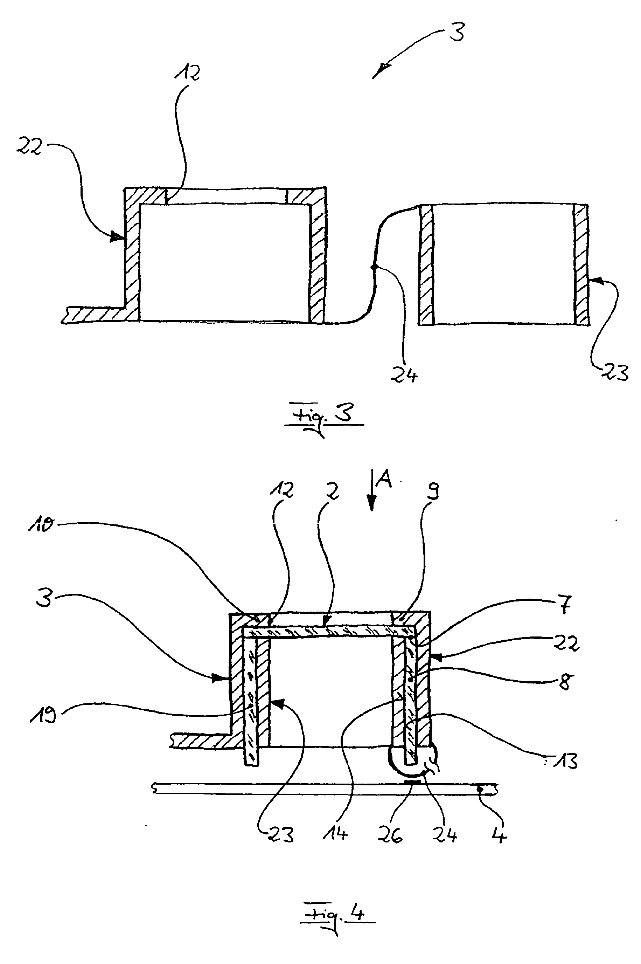

In Figur 2 ist entsprechend einem Schnitt entlang Linie X - X in Figur 1 eine Anzeigevorrichtung 1 mit dem Gehäuse 3 zu erkennen. Das Gehäuse 3 haltert eine Flüssigkristallzelle 2 mit einem Anzeigebereich 6, der in Betrachtungsrichtung A von einem Beobachter durch einen transparenten Bereich eines Zifferblattes 5 hindurch abgelesen werden kann. An einem Kontaktierungsbereich 7 der Flüssigkristallzelle 2 liegt ein Kontaktierungselement 8, das von einem Leitgummi gebildet wird, ebenso an wie an einem korrespondierenden Kontaktierungsbereich einer hier nicht dargestellten Leiterplatte. Das Kontaktierungselement 8 ist flächig ausgebildet und weist eine erste Flächenseite 13 und eine zweite Flächenseite 14 auf, an denen es in dem Gehäuse 3 geführt ist. Dazu ist das Kontaktierungselement 8 zwischen eine innere Seitenwandung 18 und eine zu dieser parallele, starr mit dem ersten Hakenelement 9 verbundene Seitenwandung 17 des Gehäuses 3 eingelegt. Die Seitenwandung 17 ist mit einem Steg 11 versteift, und das Kontaktierungselement 8 ist zwischen der Leiterplatte und dem Kontaktierungsbereich 7 der Flüssigkristallzelle 2 verspannt.

An der dem Kontaktierungselement 8 gegenüberliegenden Seite des Gehäuses 3 ist zwischen der Flüssigkristallzelle 2 und der Leiterplatte ein Stützelement 19 verspannt. Das Stützelement 19 ist in dem Gehäuse 3 zwischen der elastischen äußeren Seitenwandung 15 und einer dieser gegenüberliegenden inneren Seitenwandung 20 geführt. Die Seitenwandung 15 weist in einer Richtung B eine Beweglichkeit auf, so daß die Flüssigkristallzelle 2 bei der Montage unter das Hakenelement 9 eingeschoben und bei gleichzeitigem Zurückziehen der Seitenwandung 15 an das Gehäuse 3 anlegbar ist, woraufhin die Flüssigkristallzelle 2 durch die zurückschnappende Seitenwandung 15 mit Hilfe des zweiten Hakenelements 10 verrastet wird. Eine Abschrägung 25 an dem Hakenelement 10 vereinfacht dabei das Fügen von Flüssigkristallzelle 2 und Gehäuse 3.

Eine weitere Ausführungsform eines Gehäuses 3 ist in Figur 3 dargestellt. Dieses Gehäuse 3 weist ein erstes, trogförmiges Gehäuseteil 22 mit einer am Boden des Gehäuseteils 22 befindlichen Ausnehmung 12 sowie ein rahmenförmiges zweites Gehäuseteil 23 auf. Das erste Gehäuseteil 22 und das zweite Gehäuseteil 23 sind mittels eines angespritzten Films 24 verbunden. Das zweite Gehäuseteil 23 ist in das erste Gehäuseteil 22 einfügbar, wobei von dem zweiten Gehäuseteil 23 innere Wandungen des Gehäuses 3 und von dem ersten Gehäuseteil 22 äußere Wandungen des Gehäuses 3 gebildet werden.

Wie Figur 4 zu entnehmen, ist aus Betrachtungsrichtung A eine Flüssigkristallzelle 2 durch die Ausnehmung 12 ablesbar. Das Gehäuse 3 ist ein einziges Bauteil bildend mit einem die Flüssigkristallzelle 2 in einem Kontaktierungsbereich 7 übergreifenden ersten Hakenelement 9 und mit einem die Flüssigkristallzelle 2 in einem dem Kontaktierungsbereich 7 gegenüberliegenden Bereich übergreifenden zweiten Hakenelement 10 versehen. Die Hakenelemente 9, 10 sind dabei an dem ersten Gehäusesteil 22 ausgebildet und verspannen ein Kontaktierungselement 8 bzw. ein Stützelement 19 zwischen Flüssigkristallzelle 2 und einer Leiterplatte 4, die hier der Deutlichkeit halber - in einer nicht endgültigen Montageposition - beabstandet von dem Kontaktierungselement 8 und dem Stützelement 19 dargestellt ist (in der endgültigen Position liegen die Gehäuseteile 22, 23 und das Kontaktierungselement 8 an der Leiterplatte 4 an).

Es ist zu erkennen, daß Flächenseiten 13, 14 des Kontaktierungselements 8 in dem Gehäuse 3 zwischen den Gehäusesteilen 22, 23 geführt sind. Nach dem Fügen kontaktiert das Kontaktierungselement 8 den Kontaktierungsbereich 7 der Flüssigkristallzelle 2 mit einem Kontaktierungsbereich 26 der Leiterplatte 4. Der die Gehäuseteile 22, 23 verbindende Film 24, der als schmaler Streifen seitlich neben dem Kontaktierungselement 8 angeordnet ist, wird den Zusammenbau nicht störend zwischen Gehäuse 3 und Leiterplatte 4 eingequetscht.

## Patentansprüche

1. Anzeigevorrichtung (1), insbesondere in einem Fahrzeug, mit einem an seiner einem Betrachter zugewandten Vorderseite eine Flüssigkristallzelle (2) halternden Gehäuse (3) und mit einer auf der Rückseite des Gehäuses (3) angeordneten Leiterplatte (4) zur elektrischen Kontaktierung der Flüssigkristallzelle (2), wobei zwischen der Leiterplatte (4) und einem außerhalb eines Anzeigebereichs (6) der Flüssigkristallzelle (2) angeordneten Kontaktierungsbereich (7) der Flüssigkristallzelle (2) ein gegen die Flüssigkristallzelle (2) verspanntes, in etwa plattenförmiges und an seinen Flächenseiten (13, 14) in dem Gehäuse (3) geführtes Kontaktierungselement (8) zur elektrischen Verbindung von Leiterplatte (4) und Flüssigkristallzelle (2) angeordnet ist, wobei das Gehäuse (3) ein einziges Bauteil bildend mit einem die Flüssigkristallzelle (2) im Kontaktierungsbereich (7) übergreifenden ersten Hakenelement (9) als Gegenhalter für das verspannte Kontaktierungselement (8) und mit einem die Flüssigkristallzelle (2) in einem dem Kontaktierungsbereich (7) gegenüberliegenden, außerhalb des Anzeigebereichs (6) der Flüssigkristallzelle (2) angeordneten Bereich übergreifenden zweiten Hakenelement (10) versehen ist,
**dadurch gekennzeichnet, daß** das Gehäuse (3) eine äußere Seitenwandung (17) und eine zu dieser in etwa parallele innere Seitenwandung (18) aufweist, zwischen welchen Wandungen (17, 18) das Kontaktierungselement (8) geführt ist.

2. Anzeigevorrichtung nach Anspruch 1, **dadurch gekennzeichnet, daß** das erste Hakenelement (9) starr mit einer Seitenwandung (17) des Gehäuses (3) verbunden ist.

3. Anzeigevorrichtung nach Anspruch 2, **dadurch gekennzeichnet, daß** die Seitenwandung (17) mittels eines Steges (11) versteift ist.

4. Anzeigevorrichtung nach einem der vorhergehenden Ansprüche, **dadurch gekennzeichnet, daß** das erste Hakenelement (9) den Kontaktierungsbereich (7) in etwa über dessen gesamte Länge übergreift.

5. Anzeigevorrichtung nach einem der vorhergehenden Ansprüche, **dadurch gekennzeichnet, daß** das zweite Hakenelement (10) mit dem Gehäuse (3) in etwa in Richtung der Anzeigeebene der Flüssigkristallzelle (2) eine Elastizität aufweisend verbunden ist.

6. Anzeigevorrichtung nach Anspruch 5, **dadurch gekennzeichnet, daß** das zweite Hakenelement (10) an einer elastischen Seitenwandung (15) des Gehäuses (3) angeordnet ist.

7. Anzeigevorrichtung nach Anspruch 6, **dadurch gekennzeichnet, daß** das Gehäuse (3) zwei in einer Ebene angeordnete, in etwa senkrecht zur Anzeigeebene der Flüssigkristallzelle (2) verlaufende Schlitze (16) die elastische Seitenwandung (15) bildend aufweist.

8. Anzeigevorrichtung nach einem der vorhergehenden Ansprüche, **dadurch gekennzeichnet, daß** an einer dem Kontaktierungselement (8) gegenüberliegenden Seite des Gehäuses (3) ein zwischen der Flüssigkristallzelle (2) und der Leiterplatte (4) verspanntes Stützelement (19) angeordnet ist.

9. Anzeigevorrichtung nach Anspruch 9, **dadurch gekennzeichnet, daß** das Stützelement (19) und das Kontaktierungselement (8) in etwa gleiche elastische Eigenschaften aufweisen.

10. Anzeigevorrichtung nach Anspruch 9 oder 10, **dadurch gekennzeichnet, daß** das Stützelement (19) in dem Gehäuse (3) zwischen einer äußeren Seitenwandung (15) und einer dieser gegenüberliegenden inneren Seitenwandung (20) des Gehäuses (3) geführt ist.

11. Anzeigevorrichtung nach einem der Ansprüche 9 bis 11, **dadurch gekennzeichnet, daß** das Stützelement (19) elektrisch leitfähig ist.

12. Anzeigevorrichtung nach einem der vorhergehenden Ansprüche, **dadurch gekennzeichnet, daß** das Gehäuse (3) gegenüberliegende, die Flüssigkristallzelle (2) an nicht von einem Hakenelement (9, 10) übergriffenen Seiten führende Stege (21) aufweist.

13. Anzeigevorrichtung nach einem der vorhergehenden Ansprüche, **dadurch gekennzeichnet, daß** das Kontaktierungselement (8) und/oder das Stützelement (19) ein Leitgummi ist.

14. Anzeigevorrichtung nach einem der vorhergehenden Ansprüche, **dadurch gekennzeichnet, daß** das Gehäuse (3) ein Kunststoffspritzgußbauteil ist.

15. Anzeigevorrichtung nach einem der vorhergehenden Ansprüche, **dadurch gekennzeichnet, daß** das Gehäuse (3) zweiteilig ist, wobei das erste Gehäuseteil (22) äußere Gehäusewandungen und das zweite, in das erste Gehäuseteil (22) einfügbare Gehäuseteil (23) innere Gehäusewandungen aufweist.

16. Anzeigevorrichtung nach Anspruch 16, **dadurch gekennzeichnet, daß** im Bereich des Kontaktierungselements (8) und/oder des Stützelements (19) der Abstand zwischen der inneren und der äußeren Gehäusewandung jeweils in etwa der Dicke des Kontaktierungselements (8) und/oder des Stützelements (19) entspricht.

17. Anzeigevorrichtung nach Anspruch 16 oder 17, **dadurch gekennzeichnet, daß** das erste Gehäuseteil (22) und das zweite Gehäuseteil (23) ein einziges Bauteil bildend miteinander verbunden sind.

18. Anzeigevorrichtung nach Anspruch 18, **dadurch gekennzeichnet, daß** das erste Gehäuseteil (22) und das zweite Gehäuseteil (23) mit einem Film (24) verbunden sind.

## Claims

1. Display device (1), in particular in a vehicle, having a housing (3) on the front side of which facing a viewer a liquid crystal cell (2) is mounted, and having a printed circuit board (4) which is arranged on the rear of the housing (3) and has the purpose of making electrical contact with the liquid crystal cell (2), a contacting element (8) which is clamped against the liquid crystal cell (2), is approximately plate-shaped and is guided at its larger sides (13, 14) in the housing (3) and has the purpose of making electrical connection with the printed circuit board (4) and liquid crystal cell (2) being arranged between the printed circuit board (4) and a contacting region (7) of the liquid crystal cell (2) which is arranged outside a display region (6) of the liquid crystal cell (2), the housing (3) being provided with a first hook element (9), as mating holding element for the clamped contacting element (8), which engages over the liquid crystal cell (2) in the contacting region (7), and with a second hook element (10) which engages over the liquid crystal cell (2) in a region which lies opposite the contacting region (7) and is arranged outside the display region (6) of the liquid crystal cell (2), so as to form a single component, **characterized in that** the housing (3) has an external side wall (17) and an internal side wall (18) which is approximately parallel to the latter and between which walls (17, 18) the contacting element (8) is guided.

2. Display device according to Claim 1, **characterized in that** the first hook element (9) is rigidly connected to a side wall (17) of the housing (3).

3. Display device according to Claim 2, **characterized in that** the side wall (17) is reinforced by means of a web (11).

4. Display device according to one of the preceding claims, **characterized in that** the first hook element (9) engages over the contacting region (7) approximately over its entire length.

5. Display device according to one of the preceding claims, **characterized in that** the second hook element (10) is connected to the housing (3) so that it is elastic approximately in the direction of the display plane of the liquid crystal cell (2).

6. Display device according to Claim 5, **characterized in that** the second hook element (10) is arranged on an elastic side wall (15) of the housing (3).

7. Display device according to Claim 6, **characterized in that** the housing (3) has two slots (16) which are arranged in the same plane, approximately perpendicular with respect to the display plane of the liquid crystal side (2), and form the elastic side wall (15).

8. Display device according to one of the preceding claims, **characterized in that** a supporting element (19) which is clamped between the liquid crystal cell (2) and the printed circuit board (4) is arranged on a side of the housing (3) lying opposite the contacting element (8).

9. Display device according to Claim 9, **characterized in that** the supporting element (19) and the contacting element (8) have approximately the same elastic properties.

10. Display device according to Claim 9 or 10,
**characterized in that** the supporting element (19) is guided in the housing (3) between an external side wall (15) and an internal side wall (20), lying opposite the latter, of the housing (3).

11. Display device according to one of Claims 9 to 11, **characterized in that** the supporting element (19) is electrically conductive.

12. Display device according to one of the preceding claims, **characterized in that** the housing (3) has webs (21) which lie opposite each other and guide the liquid crystal cell (2) on sides over which a hook element (9, 10) does not engage.

13. Display device according to one of the preceding claims, **characterized in that** the contacting element (8) and/or the supporting element (19) is a conductive rubber.

14. Display device according to one of the preceding claims, **characterized in that** the housing (3) is a plastic injection moulded component.

15. Display device according to one of the preceding claims, **characterized in that** the housing (3) is in two parts, the first housing part (22) having external housing walls and the second housing part (23) which can be inserted into the first housing part (22) having internal housing walls.

16. Display device according to Claim 16, **characterized in that**, in the vicinity of the contacting element (8) and/or of the supporting element (19), the distance between the internal housing wall and the external housing wall corresponds approximately in each case to the thickness of the contacting element (8) and/or of the supporting element (19).

17. Display device according to Claim 16 or 17, **characterized in that** the first housing part (22) and the second housing part (23) are connected to one another so as to form a single component.

18. Display device according to Claim 18, **characterized in that** the first housing part (22) and the second housing part (23) are connected to a film (24).

## Revendications

1. Dispositif d'affichage (1), notamment dans un véhicule, comportant un boîtier (3) supportant une cellule à cristaux liquides (2) sur sa face avant tournée vers un observateur, et une carte à circuits imprimés (4) disposée sur la face arrière du boîtier (3) et destinée au contactage électrique de la cellule à cristaux liquides (2), où, entre la carte à circuits imprimés (4) et une zone de contactage électrique (7) de la cellule à cristaux liquides (2) située hors d'une zone d'affichage (6) de la cellule à cristaux liquides (2), est placé un organe de contactage électrique (8), qui est destiné à établir la liaison électrique entre la carte à circuits imprimés (4) et la cellule à cristaux liquides (2), qui est appliqué avec force contre la cellule à cristaux liquides (2), et qui a, à peu près, la forme d'une plaque et est guidé dans le boîtier (3) sur ses faces planes (13, 14), où le boîtier (3), formant ainsi un constituant unique, est doté d'un premier crochet (9), qui chevauche la cellule à cristaux liquides (2) sur la zone de contactage électrique (7) et qui sert de contrepartie pour maintenir l'organe de contactage électrique (8) soumis à un effort, et d'un deuxième crochet (10), qui chevauche la cellule à cristaux liquides (2) sur une zone disposée à l'opposé de la zone de contactage électrique (7), à l'extérieur de la zone d'affichage (6) de la cellule à cristaux liquides (2), **caractérisé par le fait que** le boîtier (3) a une paroi latérale extérieure (17) et, à peu près parallèlement à cette dernière, une paroi latérale intérieure (18) entre lesquelles parois (17, 18) est guidé l'organe de contactage électrique (8).

2. Dispositif d'affichage selon la revendication 1, **caractérisé par le fait que** le premier crochet (9) est fixé d'une façon rigide à une paroi latérale (17) du boîtier (3).

3. Dispositif d'affichage selon la revendication 2, **caractérisé par le fait que** la paroi latérale (17) est renforcée par une nervure (11).

4. Dispositif d'affichage selon l'une des revendications précédentes, **caractérisé par le fait que** le premier crochet (9) chevauche la zone de contactage électrique (7) à peu près sur l'ensemble de sa longueur.

5. Dispositif d'affichage selon l'une des revendications précédentes, **caractérisé par le fait que** le deuxième crochet (10), en présentant une certaine élasticité, est lié au boîtier (3) à peu près dans la direction du plan d'affichage de la cellule à cristaux liquides (2).

6. Dispositif d'affichage selon la revendication 5, **caractérisé par le fait que** le deuxième crochet (10) est monté sur une paroi latérale élastique (15) du boîtier (3).

7. Dispositif d'affichage selon la revendication 6, **caractérisé par le fait que** le boîtier (3) comporte deux fentes (16), formant la paroi latérale élastique (15), disposées dans un plan et s'étendant à peu près perpendiculairement au plan d'affichage de la cellule à cristaux liquides (2).

8. Dispositif d'affichage selon l'une des revendications précédentes, **caractérisé par le fait que**, sur un côté du boîtier (3) opposé à l'organe de contactage électrique (8), un organe de soutien (19) est disposé et serré entre la cellule à cristaux liquides (2) et la carte à circuits imprimés (4).

9. Dispositif d'affichage selon la revendication 8, **caractérisé par le fait que** l'organe de soutien (19) et l'organe de contactage électrique (8) ont à peu près les mêmes propriétés élastiques.

10. Dispositif d'affichage selon la revendication 8 ou 9, **caractérisé par le fait que** l'organe de soutien (19) est guidé dans le boîtier (3) entre une paroi latérale extérieure (15) et une paroi latérale intérieure (20) du boîtier (3) se trouvant du côté opposé à la paroi latérale extérieure (15).

11. Dispositif d'affichage selon l'une des revendications 8 à 10, **caractérisé par le fait que** l'organe de soutien (19) est conducteur de l'électricité.

12. Dispositif d'affichage selon l'une des revendications précédentes, **caractérisé par le fait que** le boîtier (3) comporte des nervures (21) se trouvant de deux côtés opposés et guidant la cellule à cristaux liquides (2) sur des côtés non chevauchés par un crochet (9, 10).

13. Dispositif d'affichage selon l'une des revendications précédentes, **caractérisé par le fait que** l'organe de contactage électrique (8) et/ou l'organe de soutien (19) est un caoutchouc conducteur.

14. Dispositif d'affichage selon l'une des revendications précédentes, **caractérisé par le fait que** le boîtier (3) est un constituant en matière plastique moulé par injection.

15. Dispositif d'affichage selon l'une des revendications précédentes, **caractérisé par le fait que** le boîtier (3) est en deux parties, la première partie (22) ayant des parois extérieures du boîtier et la deuxième partie (23) ayant des parois intérieures du boîtier, qui s'insèrent dans la première partie (22) du boîtier.

16. Dispositif d'affichage selon la revendication 15, **caractérisé par le fait que**, dans la zone de l'organe de contactage électrique (8) et / ou de l'organe de soutien (19), l'écartement respectif entre la paroi intérieure et la paroi extérieure du boîtier correspond à peu près à l'épaisseur de l'organe de contactage électrique (8) et / ou de l'organe de soutien (19).

17. Dispositif d'affichage selon la revendication 15 ou 16, **caractérisé par le fait que** la première partie (22) du boîtier et la deuxième partie (23) du boîtier sont liées l'une à l'autre, formant ainsi un composant unique.

18. Dispositif d'affichage selon la revendication 17, **caractérisé par le fait que** la première partie (22) du boîtier et la deuxième partie (23) du boîtier sont liées par une membrane (24).
